# EUROPÄISCHE PATENTSCHRIFT

(11) **EP 0 541 126 B1**
(45) Veröffentlichungstag und Bekanntmachung des Hinweises auf die Patenterteilung: **05.07.1995**
(21) Anmeldenummer: 92119091.4
(22) Anmeldetag: 06.11.1992
(51) Int. Cl.: B23H 7/10

(54) **Vorrichtung zum Messen und/oder Regeln der Zugspannung einer band- oder drahtförmigen Elektrode bei einer Funkenerosionsmaschine**
Apparatus for measuring and controlling the tension of a wire-like or tape-like electrode in an electroerosion machine
Dispositif pour mesurer et régler la tension d'une électrode en forme de fil ou de bande sur une machine d'usinage par électroérosion

(30) Priorität: 08.11.1991 DE 4137016
(43) Veröffentlichungstag der Anmeldung: 12.05.1993
(73) Patentinhaber: AG für industrielle Elektronik AGIE Losone bei Locarno, CH-6616 Losone/Locarno (CH)
(72) Erfinder: Derighetti, René, Dr. Dr. Ing., CH-6616 Losone (CH)
(74) Vertreter: von Bülow, Tam, Dr.

(56) Entgegenhaltungen:
- EP-A- 0 161 657
- PATENT ABSTRACTS OF JAPAN vol. 014, no. 532 (M-1051)22. November 1990 & JP-A-22 24 925 (MITSUBISHI ELECTRIC CORP.) 6 September 1990

## Beschreibung

Die Erfindung betrifft eine Vorrichtung zum Messen und/oder Regeln der Zugspannung einer band- oder drahtförmigen Elektrode bei einer Funkenerosionsmaschine gemäß dem Oberbegriff des Anspruches 1.

Eine derartige Vorrichtung ist aus der JP-A 222 4925 bekannt. Um bei einer Funkenerosionsmaschine die Zugspannung auf der draht- oder bandförmigen Elektrode konstant zu halten, ist es dort bekannt, die Elektrode vollständig um eine Rolle zu schlingen und die Rolle durch eine elektronisch geregelte Bremse abzubremsen. Ein Meßfühler mißt das auf die Welle der Bremse wirkende Drehmoment, das als Ist-Wert für die elektronische Regelung verwendet wird. Die Regelung beeinflußt die Bremse so, daß deren Drehmoment konstant ist, womit die auf die Elektrode wirkende Zugspannung ebenfalls konstant ist.

In der EP 0355168 A1 ist eine solche Vorrichtung beschrieben. Diese weist eine an einem verschwenkbaren Hebel drehgelagerte Rolle auf, über die eine gespannte Drahtelektrode geführt ist. Der Hebel stützt sich an einem Drucksensor ab. In Abhängigkeit von der mittels des Drucksensors erfaßten Zugspannung der Drahtelektrode wird eine in Drahtlaufrichtung stromaufwärts angeordnete Bremse derart gesteuert, daß die Zugspannung der Drahtelektrode einen vorbestimmten Wert aufweist.

In der DE 2625349 C2 ist eine Vorrichtung zur funkenerosiven oder elektrochemischen Bearbeitung von Werkstücken mit einer draht- oder bandförmigen Elektrode beschrieben, wobei je ein gesondert angetriebenes Treibrollenpaar für die Zufuhr oder Abfuhr der Elektrode beiderseits einer zwischen Führungsköpfen liegenden Arbeitsstrecke angeordnet ist. Um die Zugspannung der Elektrode zu regeln, ist eine von der Elektrode entgegen einer Federkraft oder der Schwerkraft belastete, auslenkbare Rolle vorgesehen, wobei mittels einer Fühlereinrichtung das Maß der Auslenkung der Rolle erfaßt wird. Von dem Ausgangssignal der Fühlereinrichtung wird ein die Drehzahl eines die Elektrode spannenden Motors derart abgeleitet, daß die Auslenkung der Rolle so gesteuert wird, daß die Rolle möglichst eine bestimmte Lage einhält. Die Einrichtung zur Regelung der Zugkraft ist zwischen den beiden drehmomentstarr angetriebenen Treibrollenpaaren angeordnet. Die Drehzahl des Antriebsmotors für das Zufuhrtreibrollenpaar wird in Abhängigkeit von der Auslenkung der Rolle gesteuert.

Eine andere Vorrichtung zum Steuern der Zugspannung einer Drahtelektrode bei einer Funkenerosionsmaschine ist aus der Druckschrift DE 3208036 A1 bekannt. Diese Vorrichtung dient dazu, die Zugspannung zwischen einem Zufuhrtreibrollenpaar zu einem Arbeitsbereich und einer Drahtvorratsspule zu steuern, die von einem Motor zum Drahtabwickeln angetrieben wird. Auf der Drahtstrecke zwischen der Vorratsspule und dem Zufuhrtreibrollenpaar ist eine an einem verschwenkbaren Hebel drehgelagerte Rolle vorgesehen, über die die Drahtelektrode geführt ist. Der Hebel ist im Sinne einer Spannung der Drahtelektrode federvorbelastet. An einem Ende des Hebels ist eine Fühlereinrichtung angeordnet, mit der das Auslenkungsmaß des Hebels und damit die Größe der Zugspannung erfaßt wird und ein Steuersignal erzeugt werden kann, mit dem der die Vorratsrolle antreibende Motor gesteuert wird.

In der DE 2265708 C1 ist eine Einrichtung beschrieben, die im Rahmen einer Vorrichtung zum Entsorgen einer draht- oder bandförmigen Elektrode für die funkenerosive oder elektrochemische Bearbeitung von Werkstücken dazu dient, auf der Abfuhrseite einer Funkenerosionsmaschine eine konstante Zugspannung der Elektrode hervorzurufen. Hierfür ist eine auslenkbare Umlenkrolle vorgesehen, die eine Schleife der Elektrode zwischen einem Treibrollenpaar auf der Abfuhrseite und der durch einen drehzahlveränderlichen Motor angetriebenen Aufwickelspule bildet. Das Maß der Auslenkung um eine Mittellage dient dazu, die Drehzahl der Aufwickelspule so zu steuern, daß eine konstante Zugspannung an der Elektrode für das abfuhrseitige Treibrollenpaar vorliegt.

Der Erfindung liegt die Aufgabe zugrunde, eine Vorrichtung der im Oberbegriff des Anspruches 1 genannten Art derart weiterzubilden, daß diese eine möglichst kompakte Bauform aufweist.

Diese Aufgabe wird bei einer Vorrichtung gemäß dem Oberbegriff des Anspruches 1 durch die im Kennzeichen des Anspruches 1 angegebenen Merkmale gelöst.

Bei der erfindungsgemäßen Vorrichtung bilden die Rolle, die von einer band- oder drahtförmigen Elektrode umschlungen ist, und der Motor oder die Rolle und die Bremse eine Einheit, wobei gleichzeitig durch Zusammenwirken mit einer Fühlereinrichtung ein Signal erzeugt wird, von dem die zu messende Größe der Zugspannung abgeleitet werden kann. In vorteilhafter Weise läßt sich die erfindungsgemäße Vorrichtung ohne weiteres in eine Funkenerosionsmaschine integrieren, da sie wenig Raum beansprucht. Dies steht im Gegensatz zu den Vorrichtungen nach dem Stand der Technik, bei denen eine raumbeanspruchende Schleifenbildung erfolgt, wenn die Drahtelektrode über eine auslenkbare Rolle geführt wird.

Wesentlich im Rahmen der Erfindung ist, daß die Gesamtheit von Motor oder Bremse und Zugrolle derart gehalten sind, daß eine durch das Eigengewicht hervorgerufene Gewichtskraft ohne Einfluß auf die Messung der Zugspannung bleibt. Dies läßt sich dadurch erreichen, daß die Lagervorrichtung für Motor oder Bremse und Zugrolle deren Gewicht auffängt. Der Schwerpunkt der Gesamtheit kann entweder örtlich tiefer als die Drehachse der Zugrolle oder auf deren Achse liegen. Im ersten Fall wird die Zugspannung von dem Maß einer Auslenkung der an einem ortsfesten Teil um eine sich unterhalb des Schwerpunktes befindende Achse drehgelagerten Lagervorrichtung und im zweiten Fall von dem Maß einer Drehung der Lagervorrichtung um eine durch den Schwerpunkt der Gesamtheit hindurchgehende Drehachse über eine Wechselwirkung mit einer Fühlereinrichtung abgeleitet. Durch entsprechende Mittel wird dem durch die Zugspannung hervorgerufenen Drehmoment soweit kompensatorisch entgegengewirkt, daß der Meßvorgang nicht beeinträchtigt wird.

Im Rahmen der Erfindung kann die Vorrichtung als Bremse mit einstellbarem und geregeltem Drahtzug, d.h. einstellbarem und geregeltem Drehmoment am Getriebeausgang, arbeiten. Die Reibung des Getriebes wird durch die Messung des Drahtzuges und die Regelung des Drehmomentes kompensiert.

Mit der erfindungsgemäßen Vorrichtung läßt sich in vorteilhafter Weise der Drahtzug für alle Geschwindigkeiten des Drahtes zwischen Null und dem jeweils zulässigen maximalen Wert konstant halten.

Die erfindungsgemäße Vorrichtung kann als geschwindigkeitsgeregelter Antrieb für die Fortbewegung der draht- oder bandförmigen Elektrode mit vorgegebener Geschwindigkeit eingesetzt werden. Die Fortbewegung kann in beide Richtungen erfolgen nämlich für den Drahtrückzug und den Drahtvorschub (Drahteinfädelung). Die Änderung zwischen diesen beiden Betriebszuständen läßt sich durch einfaches Umschalten mittels einer elektronischen Steuereinrichtung durchführen.

Vorteilhafte Weiterbildungen des Erfindungsgegenstandes ergeben sich aus den Unteransprüchen.

Gemäß einer dieser Weiterbildungen läßt sich ein Drahtbruch ohne Zeitverzögerung unmittelbar durch eine plötzliche Änderung des Ausgangssignals der Fühlereinrichtung erfassen.

Der Gegenstand der Erfindung wird im folgenden anhand von Ausführungsbeispielen unter Bezugnahme auf die Zeichnungen näher erläutert. Es zeigen:
- Fig.1: eine schematische Darstellung einer ersten Ausführungsform einer Vorrichtung nach der Erfindung;
- Fig.1a: eine Teilsprengdarstellung der in Fig. 1 gezeigten Ausführungsform;
- Fig.2: eine schematische Darstellung einer zweiten Ausführungsform, die der in Fig. 1 gezeigten ähnlich ist;
- Fig.3: eine schematische Darstellung einer dritten Ausführungsform einer Vorrichtung nach der Erfindung;
- Fig.3a: eine schematische Sprengteildarstellung der in Fig. 3 gezeigten Ausführungsform;
- Fig.4: die in Fig. 3 schematisch dargestellte Ausführungsform in einer unterschiedlichen Ausrichtung; und
- Fig.5: eine schematische Darstellung einer vierten Ausführungsform einer Vorrichtung nach der Erfindung.

In den Fig. werden gleichbedeutende Teile mit den gleichen Bezugszeichen bezeichnet.

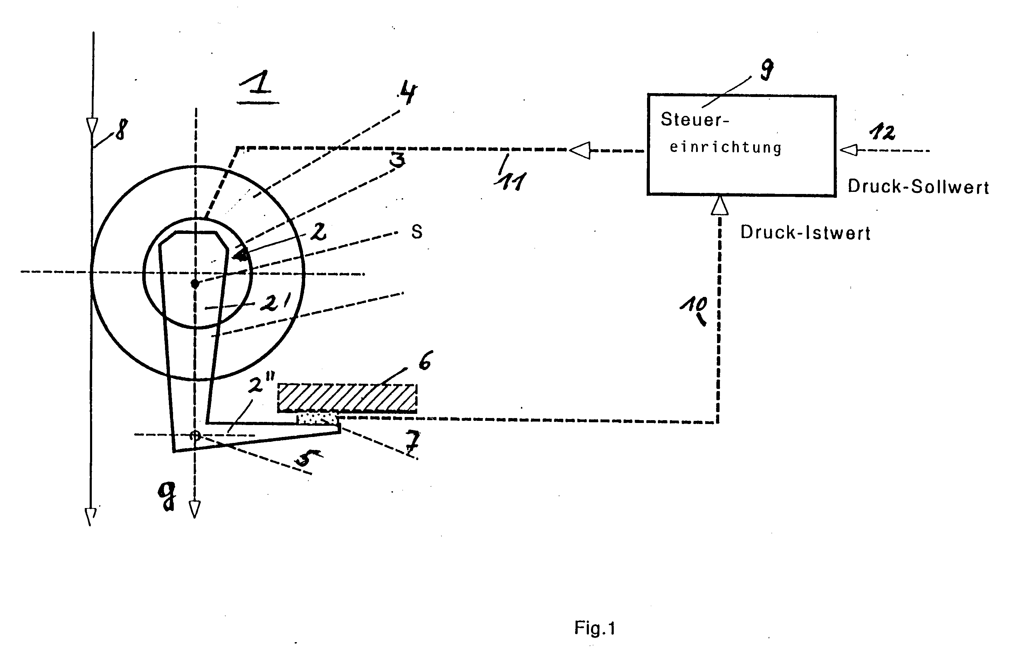

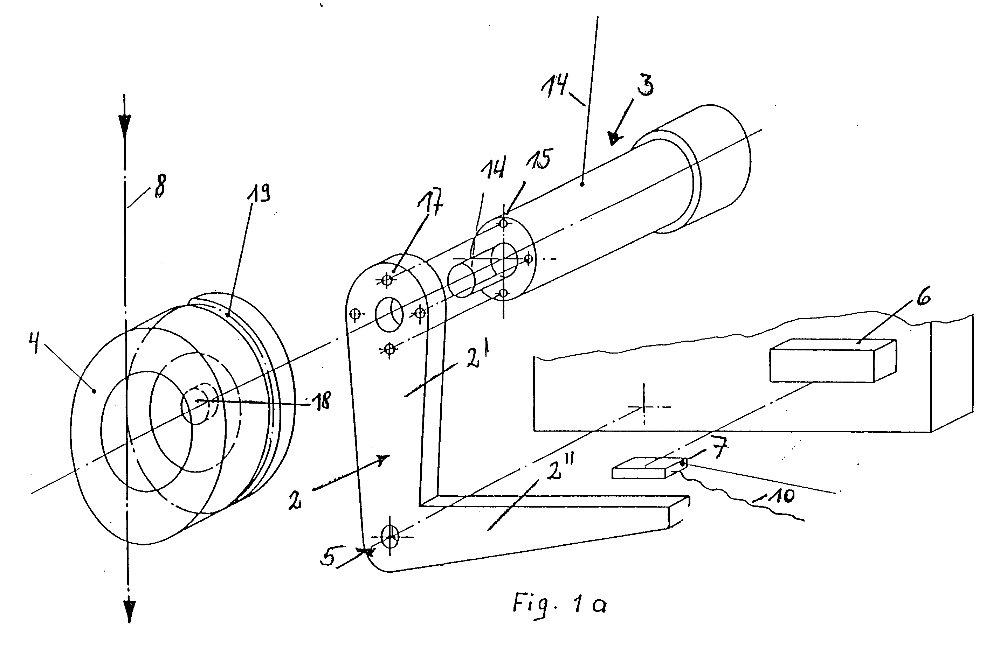

In Fig. 1 ist allgemein mit 1 eine Vorrichtung zum Messen und Regeln der Zugspannung einer band- oder drahtförmigen Elektrode gemäß einer ersten Ausführungsform bezeichnet. Von einer Lagervorrichtung 2 werden ein Motor 3 und eine Zugrolle 4 gehaltert, die drehantriebsmäßig mit dem Motor 3 verbunden ist. Die Lagervorrichtung 2 ist als ein Winkelhebel mit zwei Hebelarmen 2' und 2'' ausgebildet, der in seinem Scheitelbereich auf einer Achse 5 drehgelagert ist. An dem freien Endbereich des Hebelarmes 2' ist der bereits genannte Motor 3 befestigt.

Der freie Endbereich des anderen Hebelarmes 2'' liegt einem Drucksensor 7 gegenüber, der an einem ortsfesten Teil 6 der Vorrichtung angebracht ist.

Eine in Pfeilrichtung laufende band- oder drahtförmige Elektrode 8 ist die Zugrolle 4 umschlingend geführt. Der Einfachheit halber wird im folgenden nur von einer Drahtelektrode gesprochen, wobei damit aber auch bandförmige Elektroden eingeschlossen sind.

Die als Winkelhebel ausgebildete Lagervorrichtung 2 ist mit dem an ihr angebrachten Motor 3 und der mit diesem antriebsmäßig verbundenen Zugrolle 4 so angeordnet, daß die Drehachse 5 im wesentlichen vertikal unter dem gemeinsamen Schwerpunkt S von Lagervorrichtung, Motor und Zugrolle liegt. Mit G ist die wirkende Schwerkraft bezeichnet. Diese Anordnung ermöglicht, daß die Drahtelektrode 8 frei von irgendeiner durch das Gewicht des Motors und der Zugrolle hervorgerufenen Gewichtskraft ist.

Der Ausgang des Drucksensors 7 ist über eine elektrische Leitung 10 mit einer schematisch dargestellten Steuereinrichtung 9 verbunden. Ein Steuerausgang der Steuereinrichtung 9 ist über eine elektrische Leitung 11 mit dem Motor 3 verbunden. Der mit 12 bezeichnete Pfeil soll andeuten, daß ein Druck-Sollwert an der Steuereinrichtung 9 voreingestellt werden kann.

Es wird auf die Fig. 1a Bezug genommen, die Einzelheiten in einer Sprengdarstellung der in Fig. 1 dargestellten Ausführungsform zeigt.

Der Motor 3 weist an der Stirnseite seines Motorgehäuses 14 vier Gewindebohrungen 15 auf, von denen nur drei zu erkennen sind. Ein über die Stirnseite hinausragender Abschnitt der Motorwelle ist mit 16 bezeichnet.

Der Winkelhebel 2 weist am freien Ende des einen Hebelarmes 2' vier Durchbohrungen 17 auf, die zu den Gewindebohrungen 15 an der Stirnseite des Motorgehäuses 14 ausgerichtet sind. Im zusammengebauten Zustand der Vorrichtung ist der Hebelarm 2' auf die Stirnseite des Motorgehäuses 14 geschraubt.

Die Zugrolle 4 weist eine zentrische Bohrung 18 auf. Auf ihrer Rollenumfangsfläche ist eine Nut 19 eingearbeitet, die zur Aufnahme der die Zugrolle 4 umschlingenden Drahtelektrode 8 dient. In die Bohrung 18 der Rolle 4 erstreckt sich der aus dem Motorgehäuse 14 herausragende Motorwellenabschnitt 16. Die Rolle 4 ist auf diesem Motorwellenabschnitt 16 drehfest angebracht.

Die Arbeitsweise der in den Fig. 1 und 1a dargestellten Vorrichtung ist wie folgt. Wenn der Motor 3 so durch die Steuereinrichtung 9 angesteuert wird, daß sich die Motorwelle mit dem Drehsinn dreht, der einen Zug auf die der Zugrolle 4 zugeführte Drahtelektrode 8 ausübt (die Zufuhrrichtung oder Laufrichtung ist durch den Pfeil an der Drahtelektrode angedeutet), so wird sich der Winkelhebel 2 um die Achse 5 derart verschwenken, daß sich der freie Bereich des Hebelarmes 2'' in Richtung zu dem Drucksensor 7 bewegt oder auf diesen drückt, wenn der freie Bereich bereits mit dem Drucksensor 7 in Berührung steht. Das von dem Drucksensor 7 erzeugte Ausgangssignal ist ein Maß für die vorliegende Zugspannung an der Drahtelektrode 8. Dieses Signal stellt den Druck-Istwert dar, der über die elektrische Leitung 10 der Steuereinrichtung 9 zugeführt und in dieser mit einem Druck-Sollwert verglichen wird, der über 12 eingegeben wird oder voreingestellt worden ist. In Abhängigkeit von dem Unterschied zwischen dem Druck-Sollwert und dem Druck-Istwert wird der dem Motor 3 über die elektrische Leitung 11 zugeführte Motorstrom derart gesteuert, daß der Unterschied zwischen Druck-Istwert und Druck-Sollwert möglichst klein wird.

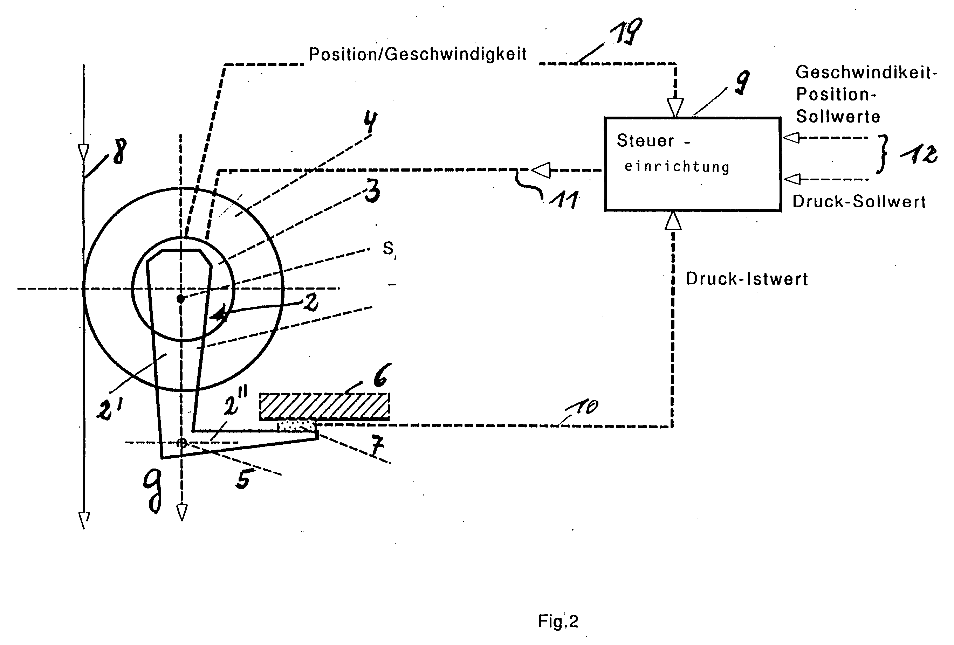

Die in Fig. 2 dargestellte zweite Ausführungsform der erfindungsgemäßen Vorrichtung unterscheidet sich von der in den Fig. 1 und 1a dargestellten Ausführungsform im wesentlichen dadurch, daß zusätzlich ein nicht näher dargestellter Tachometer oder Drehzahlgeber vorgesehen ist, der durch den Motor 3 oder die Zugrolle 4 angetrieben wird. Von dem Tachometer oder Drehzahlgeber wird ein Ausgangssignal über eine elektrische Leitung 11 der Steuereinrichtung 9 zugeführt. Ferner besteht bei dieser in Fig. 2 dargestellten Ausführungsform die Möglichkeit, über die Leitungen 12 nicht nur einen Druck-Sollwert sondern auch andere Betriebskennwerte, wie z.B. einen Geschwindigkeits-Sollwert und/oder Positions-Sollwert einzugeben. Zur Steuerung des Motorstroms über die elektrische Leitung 11, die den Motor 3 mit der Steuereinrichtung 9 verbindet, wird der Steuereinrichtung 9 nicht nur der Druck-Istwert über die elektrische Leitung 10 von dem Drucksensor 7 sondern auch ein Positions-Istwert oder Geschwindigkeits-Istwert zugeführt. Zusammen mit den voreingestellten Sollwerten wird der Motorstrom für den Motor 3 derart gesteuert, daß der Unterschied zwischen den betreffenden Istwerten und Sollwerten möglichst klein wird.

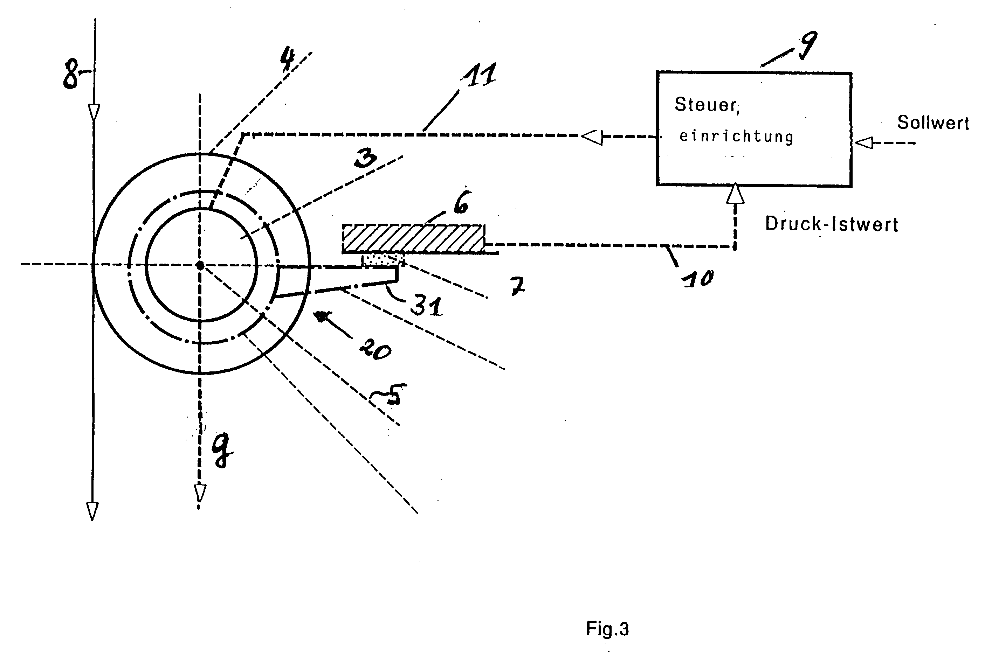

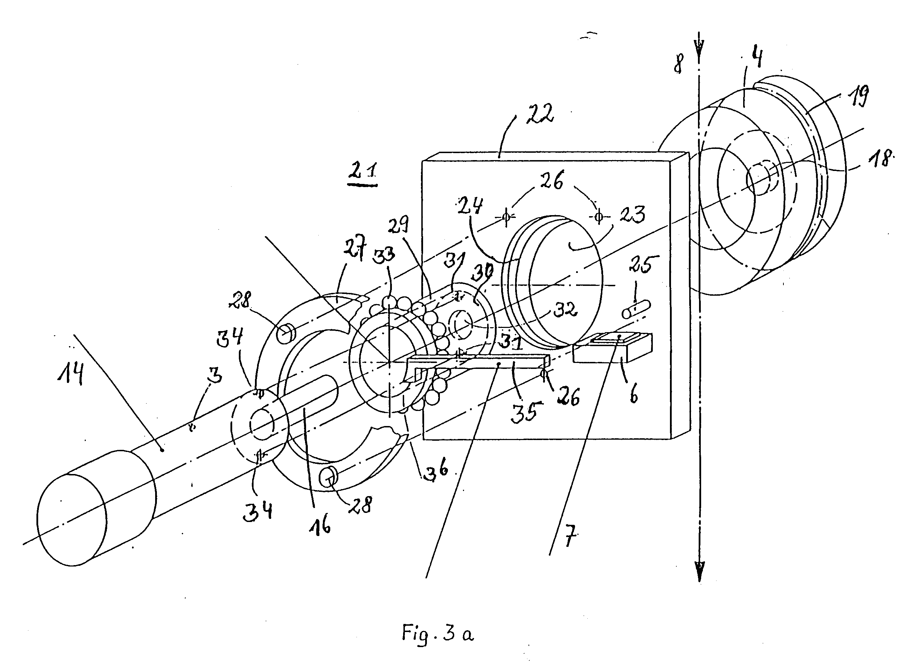

Eine dritte Ausführungsform der erfindungsgemäßen Vorrichtung ist in den Fig. 3 und 3a dargestellt. Bei dieser Ausführungsform ist mit 21 eine Lagervorrichtung für den Motor 3 und die Zugrolle 4 oder für eine Bremse und die Zugrolle 4 bezeichnet. Hier liegt der Schwerpunkt aus der Einheit Motor und Zugrolle oder Bremse und Zugrolle auf der Drehachse des Motors.

In der Fig. 3a ist die in Fig. 3 allgemein mit 21 bezeichnete Lagervorrichtung näher in der Form einer Sprengdarstellung dargestellt.

An einem ortsfesten Befestigungsteil 22, z.B. einem Teil eines Maschinenerahmens, werden der Motor 3 und die an der Motorwelle 16 drehfest angebrachte Zugrolle 4 gehalten. Der Befestigungsteil 22 weist eine mittige Durchbohrung 23 mit einem größeren Durchmesser sowie vier Gewindebohrungen 26 auf, von denen drei sichtbar sind. Die mittige Durchbohrung 23 ist an ihrer Innenwandung mit einer Ringschulter 24 ausgebildet, die als eine Laufbahn für die Kugeln eines Lagers dient. Dies wird noch näher erläutert.

An dem Befestigungsteil 22 ist ein Tragteil 6 angebracht, an dem eine Fühlereinrichtung in der Form eines Drucksensors 7 befestigt ist. Dem Drucksensor 7 gegenüberliegend befindet sich ein Anschlag 25, der ebenfalls an dem Befestigungsteil 22 angebracht ist.

An einem Befestigungsring 27 sind vier Durchbohrungen 28 ausgebildet, die zu der Anordnung der Gewindebohrungen 26 in dem Befestigungsteil 22 ausgerichtet sind. In der Fig. 3a sind nur zwei dieser Durchbohrungen 28 dargestellt. Der Befestigungsring 27 dient zur Befestigung eines Kugellagers.

Ein hohlzylinderförmiges Halteteil 29 weist an der zu dem Befestigungsteil 22 weisenden Seite eine kreisförmige Platte 30 auf, die mit dem hohlzylinderförmigen Halteteil 29 fest verbunden ist. In der kreisförmigen Platte 30 sind zwei einander gegenüberliegende Durchbohrungen 31 sowie eine mittige Durchbohrung 32 vorgesehen. Auf der äußeren Umfangsfläche des hohlzylinderförmigen Haltetteils 29 sind in dem von dem Befestigungsteil 22 fortweisenden Endbereich Kugellagerkugeln 33 angeordnet.

Es ist ein längliches Eingriffsteil 35 vorgesehen, das an dem hollzylinderförmigen Halteteil 29 an einer zum Motorgehäuse 14 weisenden Kreisringfläche 36 befestigt ist.

Wie bei den vorhergehenden Ausführungsformen ist hier ebenfalls ein Motor 3 vorgesehen, der ein Gehäuse 14 aufweist. In der zu dem Befestigungsteil 22 weisenden Stirnwand des Motorgehäuses 14 sind zwei diametral einander gegenüberliegende Gewindebohrungen 34 ausgebildet, die zu den Durchbohrungen 31 in der kreisförmigen Platte 30 des hohlzylinderförmigen Halteteils 29 ausgerichtet sind.

Auf der in Fig. 3a dem Motorgehäuse gegenüberliegenden Seite des Befestigungsteils 22 ist eine Zugrolle 4 dargestellt, die auf ihrer Umfangsfläche mit einer Nut 19 ausgebildet ist, in der die Drahtelektrode 8 die Zugrolle 4 umschlingend geführt ist. Die Bewegungsrichtung der Drahtelektrode 8 ist durch die Pfeile angedeutet.

Die Zugrolle 4 weist auch eine mittige Bohrung 18 auf, die zur Aufnahme der Motorwelle 16 dient.

Im zusammengebauten Zustand ist der hohlzylinderförmige Halteteil 29 in die mittige Durchbohrung 23 eingeführt, wobei sich die Kugeln 33 an der inneren Ringschulter 24 der Durchbohrung 23 abstützen. Der Befestigungsring 27 ist auf den Befestigungsteil 22 festgeschraubt. Das hohlzylinderförmige Halteteil 29 erstreckt sich nun durch die mittige Öffnung 23 hindurch und ragt mit einem Abschnitt über das Befestigungsteil 22 hinaus. Diese Anordnung erlaubt eine Drehung des hohlzylinderförmigen Halteteils 29 um seine Längsachse.

Bei dieser Anordnung erstreckt sich das längliche Eingriffsteil 35 in den Zwischenraum zwischen dem Drucksensor 7 und dem Anschlag 25.

Der Motor 3 ist von dem hohlzylinderförmigen Halteteil 29 aufgenommen und mit durch die Durchbohrungen 31 in der Platte 30 hindurchgeführte Schrauben befestigt, die in die Gewindebohrungen 34 an der Stirnseite des Motorgehäuses 14 eingeschraubt sind. Die Motorwelle 16 erstreckt sich nun durch die mittige Durchbohrung 32 in der Platte 30 und über diese hinaus. Auf der Motorwelle 16 ist die Zugrolle 4 drehfest befestigt.

Die Arbeitsweise dieser Ausführungsform der erfindungsgemäßen Vorrichtung ist die folgende. Es sei angenommen, daß die Zugspannung an der in Pfeilrichtung laufenden Drahtelektrode 8 erhöht werden soll. Um dies zu erreichen, muß auf die Zugrolle 4 ein Drehmoment ausgeübt werden, durch welches auf die Drahtelektrode 8 eine in Pfeilrichtung wirkende Zugkraft ausgeübt wird. Bei der Darstellung gemäß Fig. 3a, muß also die Zugrolle 4 und somit auch die Motorantriebswelle 16 im Gegenuhrzeigersinn gedreht werden, wenn man auf die Zeichnung blickt. Da das Motorgehäuse 14 um seine Längsachse drehbar gehaltert ist, dreht es sich im Uhrzeigersinn, wobei das Eingriffsteil 35 den Drucksensor 7 mit einer Kraft beaufschlagt.

Das Ausgangssignal des Drucksensors 7 wird der Steuereinrichtung 9 zugeführt und durch diese nach Maßgabe der voreingestellten Größen derart verarbeitet, daß der Motorstrom in der erwünschten Weise gesteuert wird, nämlich im Sinne einer Zunahme, wenn die Spannung erhöht werden soll und in einer entgegengesetzten Weise zur Verringerung der aufgebrachten Zugspannung. Von dem Ausgangssignal des Drucksensors 7 läßt sich die Größe der gerade vorliegenden Zugspannung ableiten.

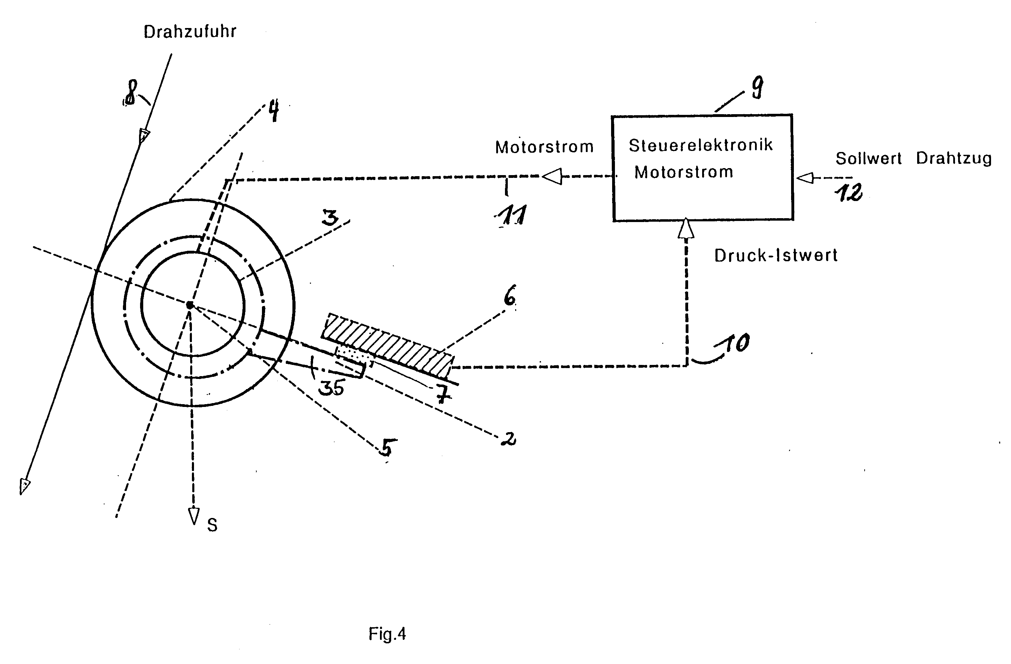

Die im Zusammenhang mit den Fig. 3 und 3a beschreibene Ausführungsform erlaubt einen relativ hohen Freiheitsgrad bei der tatsächlichen Anordnung in einer Funkenerosionsmaschine. So zeigt die Darstellung gemäß Fig. 4, daß es nicht erforderlich ist, das längliche Eingriffsteil 35 unbedingt waagerecht anzuordnen. Da bei dieser Ausführungsform der Schwerpunkt der Einheit aus Motor 3 und Zugrolle 4 auf der Drehachse des Motors 3 liegt, ist es zulässig, daß das längliche Teil 35 unter einem Winkel zur Horizonzalen verläuft. Diese Ausführungsform ist besonders gut für eine Funkenerosionsmaschine mit schwenkbaren Führungsköpfen geeignet.

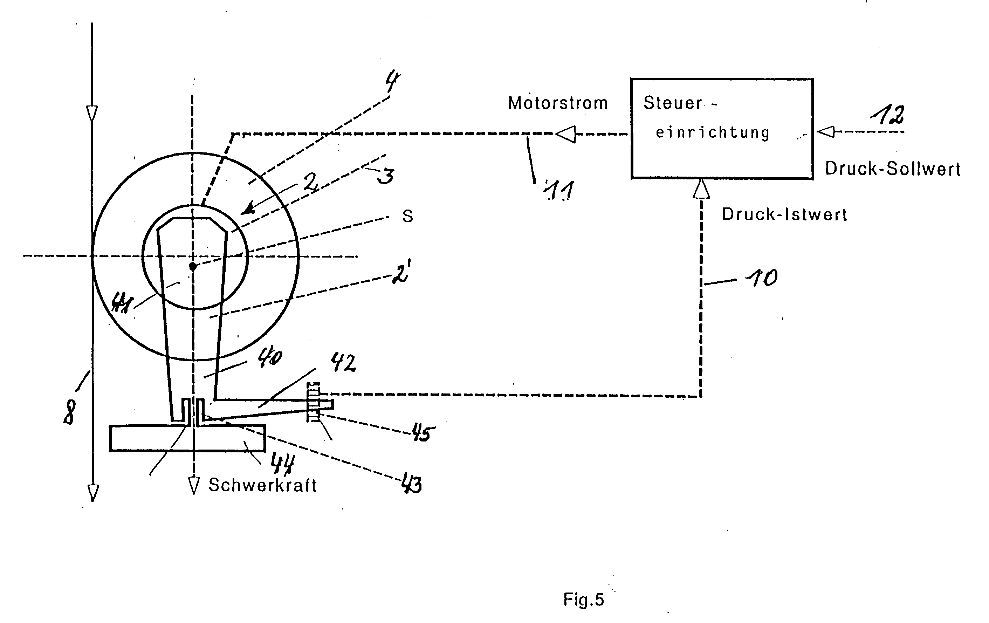

Die in Fig. 5 dargestellte Ausführungsform weist ebenfalls wie die in den Fig. 1 und 1a gezeigte als Lagervorrichtung 2 einen Winkelhebel 40 auf, dessen einer Hebelarm 41 an seinem freien Ende den Motor 3 und die an dessen Antriebswelle drehfest angebrachte Zugrolle 4 haltert. Der Schwerpunkt S der Einheit aus Lagervorrichtung 2, Motor 3 und Zugrolle 4 liegt vertikal unterhalb der Drehachse der Antriebswelle des Motors 3 oder der Zugrolle. Jedoch ist der Winkelhebel 40 nicht um eine Achse drehbar gelagert an einem ortsfesten Teil 44 wie einem Maschinenrahmen befestigt. Vielmehr ist im Scheitelbereich des Winkelhebels 40 ein elastisch federndes Befestigungsteil 43 vorgesehen, welches an einem ortsfesten Teil 44 angebracht ist. Der andere Hebelarm 42 des Winkelhebels 40 steht mit seinem freien Endbereich mit einem Wegsensor 45 derart in Wirkungseingriff, daß eine Lageänderung des Endbereiches dieses Hebelarmes 42, d.h. hier eine Schwenkbewegung erfaßt wird.

Als Wegsensor 45 kann z.B. eine optisch oder magnetisch arbeitende Fühlereinrichtung verwendet werden, deren Ausgangssignal einer Steuereinrichtung zur Steuerung des Motorstroms zugeführt wird.

## Patentansprüche

1. Vorrichtung zum Messen und/oder Regeln der Zugspannung einer band- oder drahtförmigen Elektrode (8) bei einer Funkenerosionsmaschine, bei der die band- oder drahtförmige Elektrode (8) über eine drehbare Rolle (4), die von der band- oder drahtförmigen Elektrode (8) vollständig umschlungen ist, geführt ist, und die Rolle (8) in Wirkeingriff mit einer Fühleinrichtung (7) steht, von deren Ausgangssignal ein Zugspannungssignal ableitbar ist, und bei der ein Motor (3) oder eine Bremse vorgesehen ist, wobei die Rolle (4) durch den Motor (3) drehantreibbar oder durch die Bremse abbremsbar ist
dadurch gekennzeichnet,
daß eine Lagervorrichtung (2) für die Rolle (4) und den Motor (5) oder für die Rolle (4) und die Bremse das Gewicht der Rolle und des Motors (3) oder der Rolle und der Bremse auffängt, und
daß eine Bewegung der Lagervorrichtung (2) mit der Fühleinrichtung (7) erfaßbar ist, von deren Ausgangssignal die Größe der Zugspannung ableitbar ist.

2. Vorrichtung nach Anspruch 1,
dadurch gekennzeichnet,
daß die Lagervorrichtung (2) auf einer Drehachse (5) drehgelagert ist, die sich vertikal unterhalb des Schwerpunktes (S) der Rolle (4) und des Motors (3) oder der Rolle und der Bremse befindet.

3. Vorrichtung nach Anspruch 1,
dadurch gekennzeichnet,
daß die Lagervorrichtung (2) um eine Achse drehbar gelagert ist und sich der Schwerpunkt (S) der Rolle (4) und des Motors (3) oder der Rolle und der Bremse auf dieser Achse befindet.

4. Vorrichtung nach Anspruch 3,
dadurch gekennzeichnet,
daß die Drehachse der Lagervorrichtung (2) mit der Achse der Motorantriebswelle und/oder der Zugrolle zusammenfällt.

5. Vorrichtung nach Anspruch 2,
dadurch gekennzeichnet,
daß die Lagervorrichtung (2) die Form eines Hebels aufweist und die Drehachse (5) durch dessen Scheitelbereich hindurchgeht,
daß an dem freien Endbereich des einen Hebelarmes (2') des Hebels der Motor (3) oder die Bremse und die Zugrolle (4) gehaltert sind, und
daß der freie Endbereich des anderen Hebelarmes (2'') des Hebels in Druckeingriff mit einer als Drucksensor (7) ausgebildeten Fühlereinrichtung (7) bringbar ist.

6. Vorrichtung nach Anspruch 2,
dadurch gekennzeichnet,
daß die Lagervorrichtung (2) mit einer Kraft beaufschlagbar ist, durch die eine Kraft erzeugbar ist, die einer durch die Zugspannung hervorgerufenen Bewegung der Lagervorrichtung (2) entgegenwirkt.

7. Vorrichtung nach Anspruch 6,
dadurch gekennzeichnet,
daß die die Lagervorrichtung (2) beaufschlagende Kraft eine Federkraft ist.

8. Vorrichtung nach Anspruch 2,
dadurch gekennzeichnet,
daß die Lagervorrichtung (2) die Form eines Winkelhebels (40) aufweist und der Scheitelbereich des Winkelhebels (40) über ein elastisch federndes Glied (45) an einem ortsfesten Teil (43) angebracht ist, und
daß an dem freien Endbereich des einen Hebelarmes (41) des Winkelhebels (40) der Motor (3) oder die Bremse und die Zugrolle (4) gehaltert sind und der freie Endbereich des anderen Hebelarmes (42) des Winkelhebels (40) in Wirkungseingriff mit der Fühlereinrichtung (45) bringbar ist.

9. Vorrichtung nach Anspruch 8,
dadurch gekennzeichnet,
daß das elastisch federnde Glied (43) einstückig mit dem Winkelhebel (40) ausgebildet ist.

10. Vorrichtung nach Anspruch 8,
dadurch gekennzeichnet,
daß die Fühlereinrichtung (45) ein Wegsensor ist.

11. Vorrichtung nach Anspruch einem der vorhergehenden Ansprüchen,
dadurch gekennzeichnet,
daß eine Steuerungeinrichtung (9) vorgesehen ist, die das Ausgangssignal der Fühlereinrichtung (7; 45) erhält und durch die in Abhängigkeit von dem Ausgangssignal der Strom des Motors (3) steuerbar ist.

12. Vorrichtung nach Anspruch 10,
dadurch gekennzeichnet,
daß der Motor (3) mit einem Drehpositionsgeber und/oder einem Tachometer verbunden ist, deren Ausgangssignale der Steuerungseinrichtung (9) zugeführt werden.

13. Vorrichtung nach Anspruch 10 oder 11,
dadurch gekennzeichnet,
daß durch die Steuerungseinrichtung (9) ein Warnsignal erzeugbar ist, wenn das der Steuerungseinrichtung (9) zugeführte Ausgangssignal der Fühlereinrichtung (7; 45) eine Größe aufweist, die einen Bruch der draht- oder bandförmigen Elektrode (8) anzeigt.

## Claims

1. A device for measurement and/or adjustment of the tensile stress of a wire-shaped or strip-shaped electrode (8) in an EDM machine, wherein the wire-shaped or strip-shaped electrode (8) is guided over a rotatable roller (4), the said wire-shaped or strip-shaped electrode (8) being wound completely around the said roller, the roller (4) being in operational engagement with a sensor device (7), and a tensile stress signal being derivable from the output signal from the said sensor device, and wherein a motor (3) or a brake is provided, the roller (4) being rotatably drivable by the motor (3), or braked by means of the said brake, **characterised in that**
- a bearing device (2) for the roller (4) and the motor (3), or for the roller (4) and the brake, absorbs the weight of the roller and the motor (3), or the roller and the brake;
- a movement of the bearing device (2) is detectable by the sensor device (7), and the amount of tensile stress is derivable from the output signal of the said sensor device.

2. A device in accordance with claim 1, **characterised in that** the bearing device (2) is rotatably mounted on an axis of rotation (5) positioned vertically below the centre of gravity (S) of the roller (4) and the motor (3), or of the roller and the brake.

3. A device in accordance with claim 1, **characterised in that** the bearing device (2) is rotatably mounted about an axis, and the centre of gravity (S) of the roller (4) and the motor (3), or of the roller and the brake, is located on the said axis.

4. A device in accordance with claim 3, **characterised in that** the axis of rotation of the bearing device (2) coincides with the axis of the motor shaft and/or the tensioning roller.

5. A device in accordance with claim 2, **characterised in that**
- the bearing device (2) is shaped as a lever, and the axis of rotation (5) passes through the apex region thereof;
- the motor (3), or the brake and the tensioning roller (4), are retained at the free end region of one (2') of the arms of the lever;
- the free end region of the other arm (2'') of the lever can be brought into pressure engagement with a sensor device (7) formed as a pressure sensor (7).

6. A device in accordance with claim 2, **characterised in that** a force can be caused to act upon the bearing device (2), and a force can thereby be produced which counteracts a movement of the bearing device (2) produced by the tensile force.

7. A device in accordance with claim 6, **characterised in that** the force acting upon the bearing device (2) is a resilient force.

8. A device in accordance with claim 2, **characterised in that**
- the bearing device (2) is shaped as an angled lever (40), and the apex region of the angled lever (40) is positioned on a stationary part (44) via a resilient member (43);
- the motor (3), or the brake and the tensioning roller (4), are retained at the free end region of one (41) of the arms of the angled lever (40), and the free end region of the other arm (42) of the angled lever (40) can be brought into active engagement with the sensor device (45).

9. A device in accordance with claim 8, **characterised in that** the resilient member (43) is formed as a single part with the angled lever (40).

10. A device in accordance with claim 8, **characterised in that** the sensor device (45) is a displacement sensor.

11. A device in accordance with one of the preceding claims, **characterised in that** a control device (9) is provided and receives the output signal from the sensor device (7; 45), and the current of the motor (3) can be controlled by the said device, in dependence on the output signal.

12. A device in accordance with claim 10, **characterised in that** the motor (3) is connected to a rotational-position sensor and/or a tachometer, the output signals therefrom being delivered to the control device (9).

13. A device in accordance with claim 10 or 11, **characterised in that** a warning signal can be produced by the control device (9), if the output signal from the sensor device (7; 45) delivered to the control device (9) is of a magnitude which indicates a rupture of the wire-shaped or strip-shaped electrode (8).

## Revendications

1. Dispositif pour mesurer et/ou régler la tension d'une électrode (8) en forme de bande ou de fil sur une machine d'usinage par électroérosion, selon lequel l'électrode (8) en forme de bande ou de fil est guidée sur un rouleau (4) tournant qui est entièrement enroulé par l'électrode (8) en forme de bande ou de fil et le rouleau (8) en contact avec un dispositif à palpeur (7), du signal de sortie de celui-ci pouvant être dérivé un signal de tension, et selon lequel un moteur (3) ou un [rein est prévu, le rouleau (4) pouvant être mis en rotation par le moteur (3) ou freiné par le frein, caractérisé en ce qu'un palier (2) pour le rouleau (4) et le moteur (5) ou pour le rouleau (4) et le frein amortit le poids du rouleau et du moteur (3) ou du rouleau et du frein et en ce qu'un mouvement du palier (2) peut être détecté au moyen du dispositif à palpeur (7), du signal de sortie de celui-ci pouvant être dérivée la valeur de la tension.

2. Dispositif selon la revendication 1, caractérisé en ce que le palier (2) tourne sur un axe de révolution (5) qui se trouve verticalement au-dessous du centre de gravité (S) du rouleau (4) et du moteur (3) ou du rouleau et du frein.

3. Dispositif selon la revendication 1, caractérisé en ce que le palier (2) est logé de manière pivotable autour d'un axe et le centre de gravité (S) du rouleau (4) et du moteur (3) ou du rouleau et du frein se trouve sur cet axe.

4. Dispositif selon la revendication 3, caractérisé en ce que l'axe de révolution du palier (2) coïncide avec l'axe de l'arbre d'entraînement du moteur et/ou du rouleau.

5. Dispositif selon la revendication 2, caractérisé en ce que le palier (2) présente la forme d'un levier, l'axe de révolution (5) passant dans la partie du sommet de celui-ci, en ce que le moteur (3) respectivement le frein et le rouleau (4) sont montés sur l'extrémité libre de l'un (2') des bras du levier et en ce que l'extrémité libre de l'autre bras (2'') du levier peut être mise en contact par pression avec un dispositif à palpeur (7) conçu comme palpeur de pression (7).

6. Dispositif selon la revendication 2, caractérisé en ce que le palier (2) peut être alimenté avec une force susceptible de produire une force qui agit en sens inverse d'un mouvement du palier (2), provoqué par la tension.

7. Dispositif selon la revendication 6, caractérisé en ce que la force qui alimente le palier (2) est une force à ressort.

8. Dispositif selon la revendication 2, caractérisé en ce que le palier (2) a la forme d'un levier coudé (40), la partie du sommet du levier coudé (40) étant montée sur une pièce fixe (43) par l'intermédiaire d'un élément à ressort élastique (45), et en ce que le moteur (3) respectivement le frein et le rouleau (4) sont fixés sur l'extrémité libre de l'un (41) des bras de lever du lever coudé, tandis que l'extrémité libre de l'autre bras de lever (42) du levier coudé (40) peut être mise en contact avec le dispositif à palpeur (45).

9. Dispositif selon la revendication 8, caractérisé en ce que l'élément à ressort élastique (43) forme un monobloc avec le levier coudé (40).

10. Dispositif selon la revendication 8, caractérisé en ce que le dispositif à palpeur (45) est un palpeur de déplacement.

11. Dispositif selon l'une quelconque des revendications précédentes, caractérisé en ce qu'un dispositif de commande (9) est prévu, qui reçoit le signal de sortie du dispositif à palpeur (7; 45) et qui permet de commander le courant du moteur (3) en fonction du signal de sortie.

12. Dispositif selon la revendication 10, caractérisé en ce que le moteur (3) est associé à un transmetteur de position rotative et/ou un tachymètre dont les signaux de sortie sont amenés au dispositif à palpeur (9).

13. Dispositif selon l'une des revendications 10 ou 11, caractérisé en ce que le dispositif de commande (9) peut produire un signal d'alarme lorsque le signal de sortie du dispositif à palpeur (7; 45), amené au dispositif de commande (9), présente une valeur qui indique une rupture de l'électrode (8) en forme de fil ou de bande.
